# EUROPÄISCHE PATENTSCHRIFT

(11) **EP 2 471 627 B1**
(45) Veröffentlichungstag und Bekanntmachung des Hinweises auf die Patenterteilung: **08.01.2014**
(21) Anmeldenummer: 10405251.9
(22) Anmeldetag: 29.12.2010
(51) Int. Cl.: B23K 26/38, B23K 26/40

(54) **Verfahren zur Herstellung von mechanischen Werkstücken aus einer Platte aus monokristallinem Silizium**
Method for producing mechanical workpieces from a board of monocrystalline silicon
Procédé de fabrication de pièces usinées mécaniques à partir d'une plaque en silicium monocristallin

(43) Veröffentlichungstag der Anmeldung: 04.07.2012
(73) Patentinhaber: W. Blösch AG, 2540 Grenchen (CH)
(72) Erfinder: Blösch, Peter, 2502 Biel (CH); Dumitru, Gabriel, Dr., 5415 Nussbaumen b. Baden (CH)
(74) Vertreter: Rüfenacht, Philipp Michael

(56) Entgegenhaltungen:
- EP-A1- 1 498 216
- JP-A- 63 080 989
- JP-A- 2005 074 663

## Beschreibung

Die Erfindung betrifft ein Verfahren zur Herstellung von mechanischen, insbesondere mikromechanischen, Werkstücken aus einer Platte aus monokristallinem Silizium.

### Stand der Technik

Auf vielen Gebieten der Industrie, so z. B. in der Uhrenindustrie oder Automobilindustrie, werden im Wesentlichen 2-dimensionale Werkstücke aus Materialplatten gefertigt, darunter auch Werkstücke für mechanische bzw. mikromechanische Anwendungen. Für Loszahlen von circa 500 bis 10'000 Stück wird immer häufiger auch ein Laser zum Ausschneiden der Werkstücke aus den Materialplatten eingesetzt. Nach dem Ausschneiden der Werkstücke erfolgen dann weitere Verarbeitungsschritte, wie z. B. das Aufbringen einer oder mehrerer Beschichtungen. Ein mögliches Material für solche 2-dimensionale Werkstücke ist Silizium, insbesondere kann als Ausgangsbasis eine Platte aus monokristallinem Silizium dienen.

Werkstücke aus Silizium werden insbesondere im Rahmen der Produktion von (mikro) elektronischen Baugruppen hergestellt und bearbeitet. Dabei ist es oft auch notwendig, Oberflächen aus Silizium bzw. mit Siliziumanteil zu bearbeiten.

So betrifft die JP 63-080989 (Mazda) gemäss englischem Abstract ein Schneidverfahren für ein gesintertes Siliziumnitridmaterial. Das Material wird zunächst mittels eines Laserstrahls und unter Verwendung eines internen Prozessgases geschnitten. Anschliessend wird die Schneidfläche geätzt. Dabei wird eine metallische Silizium-Schicht entfernt. Die Ätzlösung besteht aus 3 Teilen Salpetersäure und 1 Teil Flusssäure. Ziel des Verfahrens ist die Glättung der Schneidfläche.

Die US 5,022,957 (University of Southern California) beschreibt ein Verfahren zur Verbesserung der Festigkeit eines Siliziumbasierten keramischen Materials, z. B. Siliziumnitrid. Dabei wird eine mittels eines Lasers bearbeitete Oberfläche in eine Ätzlösung aus 25 Teilen Flusssäure und 1 Teil Salpetersäure eingetaucht, so dass im Wesentlichen die gesamten Siliziumrückstände auf der Oberfläche entfernt werden.

Die US 6,673,220 (Sharp) betrifft die Herstellung von Siliziumtargets, welche beispielsweise für die Herstellung von TFT-Siliziumschichten durch Bedampfen verwendet werden. Beim entsprechenden Verfahren werden Plättchen aus mono- oder polykristallinem Silizium ausgeschnitten und die Kanten angeschrägt oder abgerundet. Anschliessend werden die Plättchen geätzt, um die durch den Schneidvorgang aufgetretenen Schäden zu minimieren. Die Behandlung der Kanten hat zum Ziel, das Auftreten von kontaminierenden Teilchen beim Bedampfen zu minimieren. Schliesslich werden die Plättchen poliert und an einer rückseitigen Platte befestigt. Das Ausschneiden der Plättchen kann mittels Laser erfolgen. Die Ätzlösungen enthalten Flusssäure.

Versucht man, derartige aus der Herstellung von elektronischen Bauteilen bekannte Verfahren zur Herstellung von mikromechanischen Bauteilen (wie z. B. Zahnrädern oder Trieben) einzusetzen, stellt man fest, dass die Oberflächeneigenschaften der hergestellten Teile oft nicht den Erfordernissen für die gewünschte mechanische Funktion entsprechen, insbesondere sind die Laser-Schneidflächen des Silizium-Materials vergleichsweise rau und unregelmässig. Dies führt insbesondere zu ungünstigen tribologischen Eigenschaften der mikromechanischen Bauteile.

Die EP-A-1 498 216 offenbart ein Verfahren zum Laserschneiden von Halbleiter-Substraten aus monokristallinem Silizium.

### Darstellung der Erfindung

Aufgabe der Erfindung ist es, ein dem eingangs genannten technischen Gebiet zugehörendes Verfahren zu schaffen, welches die Herstellung von (mikro-)mechanischen Werkstücken mit regelmässiger und glatter Laser-Schnittfläche ermöglicht.

Die Lösung der Aufgabe ist durch die Merkmale des Anspruchs 1 definiert. Gemäss der Erfindung umfasst das Verfahren folgende Schritte:
a) Ausschneiden der Werkstücke aus der Platte mittels eines Laserschneidverfahrens;
b) Erhitzen der ausgeschnittenen Werkstücke und Aussetzen einer Gasatmosphäre, welche Sauerstoff und/oder Stickstoff enthält, so dass eine Oberfläche des Werkstücks mindestens im Bereich der Schnittfläche oxidiert bzw. nitriert wird;
c) Behandeln der Oberfläche der Werkstücke mindestens im Bereich der Schnittfläche mit einer chemischen Zusammensetzung, durch welche vorwiegend ein oxidierter bzw. nitrierter Anteil der Oberfläche entfernt wird.

Es hat sich gezeigt, dass mit Hilfe des erfindungsgemässen Verfahrens die Laser-Schnittflächen nach dem Schneidvorgang derart weiter bearbeitet werden, dass sie glatt ausgebildet sind und somit die Erfordernisse erfüllen, die an (mikro)mechanische Bauteile (z. B. für Uhren oder andere mikromechanische Vorrichtungen) gestellt werden. Insbesondere weisen die Bauteile an ihren Schnittflächen wesentlich verbesserte tribologische Eigenschaften auf. Dies ist beispielsweise dann von grossem Vorteil, wenn mittels des Laserschneidvorgangs Flanken eines Zahnrads erzeugt werden.

Beim Erhitzen der Werkstücke in einer Sauerstoff enthaltenden Gasatmosphäre werden diese an ihrer Oberfläche oxidiert, d. h. Silizium wird in Siliziumdioxid (SiO₂) umgewandelt. Dabei weist das polykristalline Silizium, welches im Rahmen des Laserschneidvorgangs erzeugt wurde, eine höhere Oxidationsrate auf als das ursprüngliche monokristalline Silizium.

Beim Erhitzen der Werkstücke in einer Stickstoff enthaltenden Gasatmosphäre werden diese an ihrer Oberfläche nitriert, d. h. Silizium wird in Siliziumnitrid (Si₃N₄) umgewandelt. Auch hier weist das polykristalline Silizium, welches im Rahmen des Laserschneidvorgangs erzeugt wurde, eine höhere Nitrierungsrate auf als das ursprüngliche monokristalline Silizium.

Es ist möglich, eine Atmosphäre einzusetzen, welche sowohl Sauerstoff- als auch Stickstoffanteile enthält. Bereiche der Oberfläche werden dann oxidiert, andere Bereiche nitriert, wobei die Grösse der Bereiche im mikroskopischen Massstab liegen kann.

Im Gegensatz z. B. zur JP 63-080989 erfolgen sowohl das Oxidieren bzw. das Nitrieren als auch die anschliessende Säurebehandlung nach dem Laserschneiden. Nur durch die Kombination beider Verfahrensschritte und deren Anwendung auf die Laserschneidfläche werden die erfindungsgemässen Vorteile erreicht.

Eine Anlage zur Durchführung des erfindungsgemässen Verfahrens, also zur Herstellung von mechanischen, insbesondere mikromechanischen, Werkstücken aus einer Platte aus monokristallinem Silizium umfasst:
a) eine Schneideinheit zum Ausschneiden einzelner Werkstücke aus der Siliziumplatte mit einem Laser;
b) eine Vakuumprozessstation mit einer Kammer zur Aufnahme der Werkstücke, wobei in der Kammer die Werkstücke erhitzt werden können und eine Gasatmosphäre erzeugbar ist, welche Sauerstoff und/oder Stickstoff enthält, so dass eine Oberfläche des Werkstücks mindestens im Bereich der Schnittfläche oxidiert und/oder nitriert werden kann;
c) eine Behandlungsstation zum Behandeln der Oberfläche der Werkstücke mindestens im Bereich der Schnittfläche mit einer chemischen Zusammensetzung, durch welche vorwiegend ein oxidierter bzw. nitrierter Anteil der Oberfläche entfernt wird.

Zwischen den einzelnen Prozessschritten bzw. Stationen bzw. auch vor dem Schneiden und/oder nach dem Entfernen des oxidierten bzw. nitrierten Anteils können weitere Verfahrensschritte vorgesehen werden, z. B. Reinigungsvorgänge. Als Reinigungsverfahren geeignet sind beispielsweise ein Ultraschallbad (mit einer Verweildauer von unter 5 Minuten), die Reinigung in einer alkalischen Seife bei Temperaturen von 50-80 °C (mit einer Einwirkungszeit von unter 10 Minuten) sowie die Spülung mit Reinstwasser.

Mit Vorteil erfolgt das Erhitzen auf eine Temperatur von unter 600 °C, bevorzugt auf eine Temperatur von unter 500 °C, besonders bevorzugt auf eine Temperatur von unter 400 °C. Es hat sich gezeigt, dass auch bei vergleichsweise tiefen Temperaturen gute Ergebnisse, d. h. ausreichende Oxidation bzw. Nitrierung der polykristallinen Anteile der Schnittfläche bei geringer Beeinflussung der monokristallinen Anteile, erreicht werden können.

Bevorzugt erfolgt das Oxidieren und/oder Nitrieren der Werkstücke plasma-unterstützt. Die Plasmaunterstützung ermöglicht eine effektive Oxidation bzw. Nitrierung bei solchen vergleichsweise tiefen Temperaturen, dies insbesondere dann, wenn ein pulsierendes Plasma eingesetzt wird, wobei die Dauer einzelner Entladungen bevorzugt im Bereich von ca. 20-80 µs liegt, bei einer Repetitionsrate von ca. 1000-4000 Hz.

Das Aufheizen in einer Prozesskammer erfolgt beispielsweise von Raumtemperatur auf die angegebene Temperatur in 70 - 300 Minuten, bevorzugt in 120 - 180 Minuten.

Alternativ können auch höhere oder tiefere Temperaturen eingesetzt werden, wobei bei tieferen Temperaturen die Behandlungszeit verlängert werden kann, um eine ausreichende Oxidation bzw. Nitrierung zu erreichen. Tiefere Temperaturen sind insbesondere dann angezeigt, wenn die Werkstücke während der Behandlung wie unten beschrieben mit einer Platte verbunden sind; die Temperatur wird in diesen Fällen so gewählt, dass die Verbindung nicht gelöst wird.

Bevorzugt enthält die Gasatmosphäre als aktives Gas N₂O (Lachgas). Da Lachgas sowohl Sauerstoff- als auch Stickstoff-Anteile enthält, führt dies zu einer teilweisen Oxidation und einer teilweisen Nitrierung. Primär werden die polykristallinen Anteile der Schnittfläche oxidiert oder nitriert.

Die Behandlung erfolgt beispielsweise in mehreren Schüben. Nach der eigentlichen Oxidation und Nitrierung wird das Werkstück abgekühlt.

Geeignete Parameter für die Behandlung mit Lachgas sind z. B. eine Prozesszeit von 90 - 360 Minuten in einer N₂O-Atmosphäre bei 400 - 800 Pa. Das Plasma wird erzeugt, indem Spannungen von bis zu 550 V und Ströme von bis zu 60 A eingesetzt werden. Die Dauer einer einzelnen Entladung beläuft sich z. B. auf ca. 50 µs, die Repetitionsrate beträgt 2500 Hz. Das Abkühlen erfolgt frei in der Anlage und dauert ca. 8 - 15 Stunden.

Alternativ werden reiner Stickstoff oder reiner Sauerstoff eingesetzt, bzw. Gase, die nur eines der beiden Elemente enthalten.

In einer bevorzugten Ausführungsform werden die Werkstücke zum Oxidieren und Nitrieren in einer ersten Phase einer Gasatmosphäre ausgesetzt, welche dominiert ist von N₂ und H₂ und in einer zweiten Phase einer Gasatmosphäre, welche dominiert ist von N₂O. Dadurch werden die Werkstücke sowohl oxidiert als auch nitriert. Es hat sich gezeigt, dass diese Kombination im Rahmen des erfindungsgemässen Verfahrens gute Ergebnisse, d. h. besonders gute tribologische Eigenschaften der behandelten Schnittflächen, liefert. Besonders bevorzugt umfasst die erste Phase eine erste und eine zweite Teilphase, wobei ein Verhältnis zwischen der zugeführten Menge von H₂ zu N₂ in der ersten Teilphase grösser ist als in der zweiten Teilphase.

Der Druck beträgt in der ersten Phase bevorzugt unter 250 Pa, in der zweiten Teilphase kann er wie vorstehend erwähnt auf 400 - 800 Pa erhöht werden.

Mit Vorteil basiert die chemische Zusammensetzung auf Fluorwasserstoffsäure (Flusssäure). Es hat sich gezeigt, dass diese die nitrierten bzw. oxidierten Anteile von der Schnittfläche ablöst, während die nicht-nitrierten bzw. nicht-oxidierten (monokristallinen) Anteile wenig beeinflusst werden. So wird Siliziumdioxid unter Bildung von gasförmigem Siliziumtetrafluorid (SiF₄) durch Fluorwasserstoffsäure gelöst. Entsprechend ergibt sich nach der Säurebehandlung eine glatte und tribologisch günstige Schnittfläche.

Andere flüssige oder gasförmige Zusammensetzungen sind alternativ oder zusätzlich einsetzbar, z. B. Kalilauge (wässrige Lösung von KOH) bzw. alkalische Schmelzen oder Phosphorsäure zum Ablösen von Siliziumnitrid.

Mit Vorteil werden die Werkstücke nach der Behandlung mit der chemischen Zusammensetzung durch Beschichten weiter verarbeitet. Insbesondere können die Werkstücke mit einem Pulverlack, mit Teflon oder mit DLC (diamond-like carbon) beschichtet werden. Mögliche Beschichtungsverfahren schliessen PVD-, CVD- oder ECD-Beschichtungsverfahren ein. Dadurch kann die Werkstückoberfläche (z. B. mechanische oder optische) Eigenschaften erhalten, die sich von denjenigen des Grundmaterials Silizium unterscheiden und somit durch die Beschichtung veredelt werden.

Alternativ können die Werkstücke auch anderweitig chemisch oder mechanisch weiterbearbeitet werden. Insbesondere können die Werkstücke geätzt, geschliffen, poliert, gebohrt oder gefräst werden.

Das Ausschneiden der Werkstücke erfolgt wie erwähnt mit einem Laser. Dazu wird vorzugsweise ein Schneidelaserstrahl eines gepulsten Lasers verwendet, der Licht bei einer Wellenlänge von 532 nm emittiert. Die Pulsdauer des Lasers ist bevorzugt 5 - 15 ps, die Repetitionsfrequenz der Laserpulse kann beispielsweise zwischen 200 und 1000 kHz variieren und der Durchmesser des Schneidelaserstrahls im Fokus (Spot) beträgt zwischen 10 µm und 30 µm.

Die Werkstücke werden mit Vorteil ausgeschnitten, indem der Laserstrahl Bahnen, die parallel zu allen Konturen der Werkstücke sind, mehrmals abfährt. Dies kann unter atmosphärischer Luft erfolgen. Die Abstände zwischen den Bahnen betragen vorzugsweise zwischen 25 und 75 % des Spotdurchmessers; für eine 0.21 mm dicke Platte soll sich beispielsweise eine minimale Gesamtbreite aller Konturen von 100 µm ergeben.

Grundsätzlich kann sowohl mit Einzelpulsen als auch mit Pulszügen gearbeitet werden, wobei Pulsenergien von 10 bis 80 µJ und Pulsintervalle von 1 bis 5 µs eingesetzt werden. Das erfindungsgemässe Verfahren ist besonders dann von Vorteil, wenn beim Schneiden von mikromechanischen Werkstücken Pulsenergien von mehr als 30 µJ, insbesondere von mehr als 50 µJ eingesetzt werden, weil in diesen Fällen ohne das erfindungsgemässe Verfahren unebene Schnittflächen entstehen mit entsprechend schlechten tribologischen Eigenschaften. Die Pulszüge sind Reihen von 2 bis 10 Laserpulsen, die 10 bis 50 ns voneinander zeitlich getrennt sind. Die Folgefrequenz der Pulszüge liegt im erwähnten Bereich von 200 - 1000 kHz.

Beim Abfahren der vordefinierten Bahnen liegen die Vorschubgeschwindigkeiten zwischen 50 und 1'000 mm/s. Die Anzahl Wiederholungen obiger Bahnen hängt von den gewählten Pulsenergien und Vorschubgeschwindigkeiten ab, z. B. 4 bis 7 Wiederholungen für ∼80 µJ und 100 mm/s, 15 bis 20 Wiederholungen für ∼15 µJ und 250 mm/s für die oben erwähnte Platte mit einer Dicke von 0.21 mm.

Der Laserstrahl kann auf die obere oder auf die untere Seite der Siliziumplatte bzw. auf eine Ebene dazwischen fokussiert werden. Je nach Material und Dicke der Siliziumplatte kann eine schrittweise Verschiebung des Brennpunktes zwischen aufeinanderfolgenden Durchläufen derselben Bahn von Vorteil sein.

Bevorzugt wird die Platte vor dem Ausschneiden der Werkstücke auf einem Träger befestigt, nach dem Ausschneiden wird ein Rahmen vom Träger entfernt und die Werkstücke verbleiben nach dem Ausschneiden für das Oxidieren bzw. Nitrieren auf dem Träger.

Den Rahmen bildet ein Teil, insbesondere der zusammenhängende Teil, der bearbeiteten Materialplatte, welcher keine Werkstücke bildet, also das komplementäre Abbild der zu fertigenden Werkstücke oder zumindest ein substanzieller Teil davon. Insbesondere umschliesst der Rahmen das Werkstück respektive die Werkstücke. Indem die Werkstücke nach dem Ausschneiden auf dem Träger verbleiben und nur der Rahmen entfernt wird, bleiben die Werkstücke gehalten und positioniert. Aufgrund der Entfernung des Rahmens sind die Schnittflächen frei zugänglich. Dies hat den Vorteil, dass der Träger zusammen mit den darauf befestigten Werkstücken als ganzes zur Weiterverarbeitung (Oxidation bzw. Nitrierung) weitergeleitet werden kann. Zudem ist auch nach dem Ausschneiden die exakte Position der Werkstücke auf dem Träger bekannt, was den Vorteil hat, dass weitere spezifische Bearbeitungen an den Werkstücken direkt nach dem Ausschneiden in Abhängigkeit von der bekannten Position (und Orientierung) der Werkstücke vorgenommen werden können. Dies ermöglicht insgesamt eine effiziente und zeitsparende Handhabung der Werkstücke.

Dadurch verringert sich die gesamte Herstellungszeit der Werkstücke, da die Zeit zur erneuten Positionierung und Befestigung der Werkstücke auf einem Träger oder einer Halterung entfällt. Auch braucht es keine zusätzliche Anlage, die diese Positionierung und Befestigung vornimmt.

Je nach Art der Anbringung und der Einwirkung der chemischen Zusammensetzung auf die Werkstücke können letztere auch bei der Entfernung des oxidierten bzw. nitrierten Anteils der Oberfläche auf dem Träger belassen werden. Alternativ werden sie nach dem Nitrieren bzw. Oxidieren und der Behandlung mit der chemischen Zusammensetzung vom Träger entfernt. Es ist auch denkbar, dass die Siliziumplatte derart am Träger befestigt wird, dass die chemische Zusammensetzung gleichzeitig die Befestigung der Werkstücke löst und den oxidierten bzw. nitrierten Anteil der Oberfläche entfernt.

Als Träger geeignet sind Platten aus Glas, Metall oder Kunststoff. Die Glasplatte hat den Vorteil, dass sie eine Beaufschlagung der Verbindungsstellen bzw. der Schneidestellen durch den Träger hindurch ermöglicht. Dadurch kann verhindert werden, dass der Laser die Materialplatte beschädigt. Metall- oder Kunststoffplatten aus einem geeigneten Material sind vorzuziehen, wenn die Werkstücke bei der Einwirkung der verwendeten chemischen Zusammensetzung, z. B. durch Flusssäure, auf dem Träger verbleiben sollen, da eine Glasplatte durch Flusssäure angegriffen würde.

Mit Vorteil wird die Siliziumplatte nur lokal mit dem Träger verbunden, nämlich an Stellen, wo nach dem Ausschneiden Werkstücke gebildet sind, und/oder an Stellen, wo Material beim Ausschneiden der Werkstücke mit dem Laser entfernt wird. Dies ermöglicht anschliessend ein leichtes Entfernen des Rahmens, da dieser nach dem Ausschneiden der Werkstücke nun nicht mehr gehalten ist.

Gemäss einer ersten Ausführungsmöglichkeit wird die Siliziumplatte wie folgt am Träger angebracht:
a) Zuerst wird die Platte mit dem Träger in Kontakt gebracht.
b) Danach erfolgt ein lokales Erwärmen des Trägers mittels Beaufschlagung eines Lasers.

Dabei bildet sich eine Schmelze, an der die Platte haften kann. Dies hat den Vorteil, dass sehr gezielt lokale Verbindungen zwischen der Platte und dem Träger hergestellt werden können, die sich später dann leicht lösen lassen. In Kontakt bringen kann auch bedeuten, dass die Platte auf den Träger während der Beaufschlagung des Lasers gepresst wird. Neben den Möglichkeiten, die Verbindungen nach der Verarbeitung der Werkstücke chemisch oder mechanisch zu lösen, können die Verbindungen, das heisst die Schmelze, nach der Verarbeitung der Werkstücke wieder erwärmt werden, wodurch die Werkstücke vom Träger gelöst werden.

Mit Vorteil umfasst die Anlage also eine Laserquelle zur Beaufschlagung zwecks Befestigung der Siliziumplatte am Träger. Idealerweise ist die Anlage derart ausgelegt, dass der Laser ausser zum Befestigen auch zum Ausschneiden der Werkstücke verwendet werden kann. Je nach Ausführungsform kann es notwendig sein, Strahlengang, Charakteristik des Lasers, optisches System und/oder Position des Trägers für diese beiden Tätigkeiten jeweils anzupassen. Natürlich ist es als Variante auch möglich, für das Befestigen und das Ausschneiden zwei verschiedene Laserwerkzeuge einzusetzen.

Mit Vorteil erfolgt die Beaufschlagung mit dem Laser zwecks Befestigung der Siliziumplatte durch den Träger hindurch. Dies hat den Vorteil, dass die Siliziumplatte beim

Beaufschlagen mit dem Laser nicht beschädigt werden kann. Zudem ist es dadurch nicht notwendig, dass die Siliziumplatte für den Befestigungslaser transparent ist.

Alternativ ist es auch möglich, durch die Siliziumplatte hindurch die Beaufschlagung des Trägers mit dem Laser vorzunehmen. Dabei kann es notwendig sein den Befestigungslaser respektive die Laserparameter des Befestigungslasers anzupassen.

Gemäss einer zweiten Ausführungsmöglichkeit kann die Platte durch Auftragen einer Haftschicht am Träger befestigt werden. Dabei kann die Haftschicht entweder auf den Träger, auf die Siliziumplatte oder sowohl auf den Träger als auch auf die Siliziumplatte aufgetragen werden. Es ist zudem möglich, dass die Haftschicht aus verschiedenen Komponenten besteht, die jeweils entweder auf den Träger oder auf die Siliziumplatte aufgetragen werden. Zudem ist es vorstellbar, dass der Träger anstelle der Beaufschlagung durch den Laser auch anderweitig lokal derart erwärmt werden kann, dass sich eine Schmelze bildet. Zum Beispiel könnte auch elektrisch, mittels Induktion oder einer Flamme erwärmt werden.

Um beim Erwärmen Material für die Schmelze zu liefern, an der die Siliziumplatte haften kann, wird mit Vorteil auf dem Träger eine zusätzliche Schmelzschicht angebracht. Eine solche zusätzliche Schmelzschicht kann insbesondere aus Metall, mit Vorteil aus Aluminium, bestehen. Als eine andere geeignete Schmelzschicht hat sich ein Pb-Lot mit 95 Gew.% Pb und 5 Gew.% Sn herausgestellt.

Alternativ kann auf eine solche zusätzliche Schmelzschicht auch verzichtet werden.

Gemäss einer dritten Ausführungsmöglichkeit wird die Siliziumplatte wie folgt am Träger angebracht:
a) Aufbringen einer Haftschicht, insbesondere einer doppelseitigen Klebefolie, auf den Träger,
b) Aufheben der Hafteigenschaft der Haftschicht zumindest an jenen Stellen, wo der Rahmen zu liegen kommt,
c) Anpressen der Siliziumplatte an die auf dem Träger verbliebene Haftschicht.

Die Hafteigenschaft kann aufgehoben werden, indem z. B. die Haftschicht an den entsprechenden Stellen abgedeckt wird oder auch indem die Haftschicht an den entsprechenden Stellen wieder entfernt wird. Dabei ist es möglich, dass die Haftschicht auch noch an weiteren Stellen entfernt respektive abgedeckt wird, solange gewährleistet ist, dass die Werkstücke noch genügend Klebefläche mit der Haftschicht aufweisen. Solche Haftschichten können schon auf Vorrat auf den Träger angebracht und dann je nach Gebrauch individuell wieder bearbeitet respektive entfernt werden. Als mögliche Haftschicht kann z. B. eine Doppelklebefolie angebracht werden.

Als Klebefolie geeignet sind z. B. Polyimid-Trägerfolien, die beidseitig mit einem Klebstoff, z. B. auf der Basis eines Polysiloxans, beschichtet sind. So ist ein geeignetes Klebeband beispielsweise unter der Bezeichnung CMC 70752 von der Firma CMC Klebetechnik GmbH, Frankenthal/Pfalz (Deutschland) im Handel erhältlich.

Es sind aber auch andere Klebstoffe, z. B. Abdecklack vorstellbar. Die Haftschicht kann unter anderem mit einem Druckverfahren, insbesondere Tampondruck oder Siebdruck, appliziert werden, falls sie in geeigneter Form, insbesondere in flüssiger Form, vorhanden ist.

Mit Vorteil werden die Werkstücke nach der weiteren Verarbeitung chemisch, z. B. mit einem Lösungsmittel, insbesondere Aceton, vom Träger gelöst. Dies ist ein schonendes und einfaches Verfahren, um die Werkstücke vom Träger zu entfernen.

Geeignet als Lösungsmittel sind insbesondere auch auf modifizierten Aminen oder geeigneten Estern und/oder organischen Quellmitteln basierende Reiniger. Zur Unterstützung des Lösevorgangs kann das entsprechende Bad erwärmt bzw. erhitzt werden.

In weiteren bevorzugten Ausführungsformen werden die Werkstücke thermisch vom Träger gelöst. Als Beispiel sei das Erwärmen der Verbindungsstellen mit einem Laser erwähnt. Die Erwärmung kann lokal erfolgen, d.h. die zu lösenden Verbindungsstellen werden gezielt erwärmt, beispielsweise mit einem Heizfinger oder einem Laserstrahl von der Unterseite des Trägers her. Das Lösen der Werkstücke kann sequentiell erfolgen, oder es werden mehrere Stellen gleichzeitig lokal erwärmt, z. B. durch mehrere beabstandete Heizfinger. So kann die thermische Einwirkung lokal begrenzt werden, wodurch Schäden am Werkstück, z. B. an einer aufgebrachten Beschichtung, vermieden werden können.

Bei einer weiteren bevorzugten Ausführungsform werden die Werkstücke mechanisch mittels einer lateralen Beanspruchung, z. B. durch Schaben bzw. Rakeln, vom Träger gelöst. Eine solche leichte laterale Beanspruchung ist eine einfache Methode, die Werkstücke zu lösen, insbesondere wenn die Siliziumplatte am Träger mittels eines Lasers befestigt wurde. Dazu kann eine laterale Kraft auf die Werkstücke ausgeübt werden.

Weitere Verfahren zum temporären Verbinden der Siliziumplatte mit dem Träger sind möglich. So z. B. ein Verfahren, bei welchem ein auf den Glasträger druckbares Glaslot (auch bonding paste, Glasfritte) verwendet wird. Das Bonding-Medium wird an denjenigen Stellen, wo die Werkstücke zu liegen kommen, durch Siebdruck aufgebracht. Das Bonden erfolgt in speziellen, kommerziell erhältlichen Anlagen unter Vakuum und bei Temperaturen von beispielsweise 420-450 °C. Die Fertigteile werden in diesem Fall abgelöst, indem der Träger auf die Temperatur aufgewärmt wird, bei der das Glaslot wieder flüssig wird, was wiederum ein mechanisches Entfernen (Ziehen mit einer Saugvorrichtung, einer "Vakuumpinzette") der Fertigteile ermöglicht.

Ein weiteres mögliches Verfahren beruht auf einem eutektischen Bonden oder auf einem Diffusionsbonden. Auf dem Träger wird eine elementare Metall- oder eine Legierungsschicht aufgebracht, und zwar nur an denjenigen Stellen, wo die Werkstücke zu liegen kommen. In speziellen, kommerziell erhältlichen Anlagen, unter Druck und bei einer auf das verbindende Material abgestimmten Temperatur entstehen chemische Verbindungen zwischen der Beschichtung und der Siliziumplatte, wodurch letztere am Träger angehaftet wird.

Die Fertigteile werden insbesondere in einem chemischen Bad abgelöst. Die Metall- bzw. Legierungsschicht wird chemisch angegriffen und somit die Fertigteile gelöst.

Weitere Verfahren basieren auf anderen Bonding-Methoden. So bietet beispielsweise die Firma Brewer Science, Rolla, USA unter der Bezeichnung WaferBOND® HT Materialien zum temporären Bonden an. Das Haftmittel wird auf dem Träger aufgebracht, danach folgt ein wärmebasiertes Aushärten. Die Werkstücke werden abgelöst, indem sie und der Träger erwärmt werden und die Werkstücke anschliessend seitlich weggezogen werden. Ferner sei es auch als Beispiel das direkte Bonden von hochpolierten (z. B. Rₐ < 1 nm) Glasträgern und Siliziumplatten (auch Fusionsbonden) erwähnt, welches auf der Ausbildung von hochfesten Atombindungen bei atomarem Kontakt beider Oberflächen beruht. Das Fügen beider Partner erfolgt bereits bei Raumtemperatur, gefolgt von einem Tempern zur Erhöhung der Festigkeit. Das Ablösen der Werkstücke erfolgt wie bereits erwähnt durch eine mechanische Beanspruchung.

Geeignete Verfahren zum temporären Befestigen der Platte und zum Ablösen der Werkstücke vom Träger sind in der europäischen Patentanmeldung Nr. 10 405 113.1 der Blösch Ressourcen AG vom 10.06.2010 beschrieben.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Draufsicht auf ein im Rahmen eines erfindungsgemässen Verfahrens hergestelltes Werkstück;
- Fig. 2a, b: eine Querschnittsdarstellung und eine Draufsicht einer mit einem Träger lokal verbundenen Siliziumplatte;
- Fig. 3: eine Querschnittsdarstellung des Trägers und der Siliziumplatte nach dem Schneidvorgang;
- Fig. 4: eine Querschnittsdarstellung des Trägers und der Werkstücke nach dem Entfernen des Rahmens;
- Fig. 5: ein Blockdiagramm einer erfindungsgemässen Anlage;
- Fig. 6: Verfahrensparameter für ein erstes Ausführungsbeispiel;
- Fig. 7: elektronenmikroskopische Aufnahmen von Seitenflächen von Werkstücken, welche gemäss einem ersten Beispiel und Vergleichsversuchen hergestellt worden sind;
- Fig. 8: Verfahrensparameter für ein zweites Ausführungsbeispiel; und
- Fig. 9: elektronenmikroskopische Aufnahmen von Seitenflächen von Werkstücken, welche gemäss einem zweiten Beispiel und Vergleichsversuchen hergestellt worden sind.

Grundsätzlich sind in den Figuren gleiche Teile mit gleichen Bezugszeichen versehen.

### Wege zur Ausführung der Erfindung

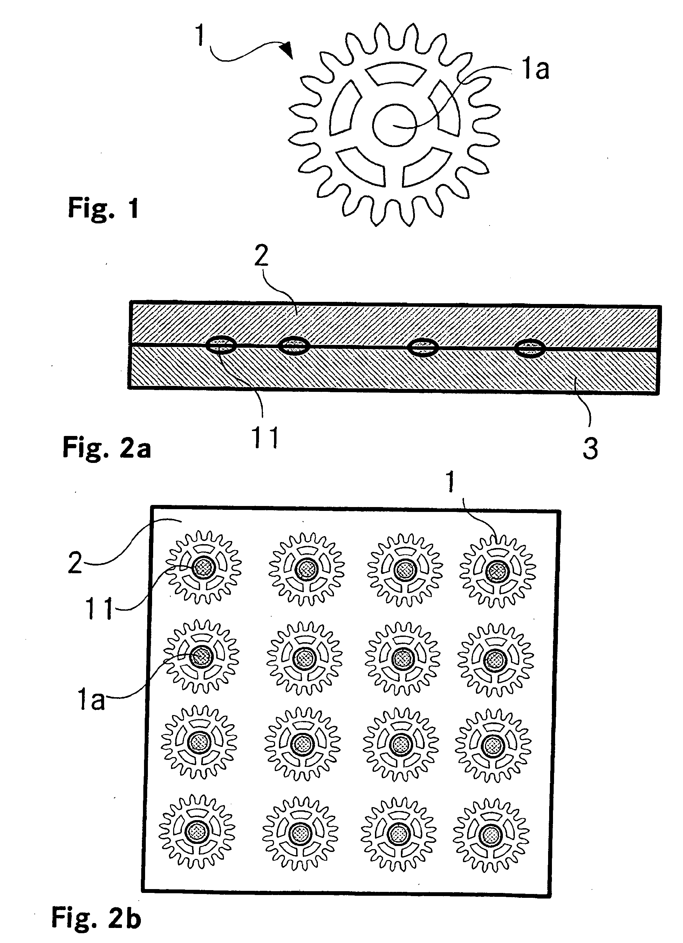

Als Anwendung des erfindungsgemässen Verfahrens werden zahnradförmige Werkstücke 1 gemäss Figur 1 aus einer Siliziumplatte 2 mit einer Dicke von 0.21 mm ausgeschnitten und nach der Weiterbehandlung der Schnittfläche mit DLC (diamond-like carbon) beschichtet. Die Werkstücke 1 weisen einen Gesamtdurchmesser von 2.2 mm auf und besitzen im Zentrum eine kreisförmige Aussparung 1a mit einem Durchmesser von 0.4 mm. Solche zahnradförmigen Werkstücke 1 werden z. B. in der Uhrenindustrie eingesetzt.

Zunächst wird die Siliziumplatte 2 an ausgewählten Stellen lokal an einer Glasplatte 3 befestigt. Ein geeignetes Verfahren ist das eutektische Bonden, bei welchem in an sich bekannter Weise eine zweikomponentige Legierung, z. B. Al-Si, auf den Träger aufgebracht wird, und zwar nur an denjenigen Stellen, wo die Werkstücke zu liegen kommen. Die Al-Si-Schicht wird dann mit einem Druck von beispielsweise 25 kN unter einer Temperatur von 575-600°C während 20 Minuten verbunden. Dazu geeignete Systeme sind beispielsweise von der Firma Suss MicroTec erhältlich.

Anstelle von Al-Si lässt sich auch beispielsweise Au-Si verwenden. Die entsprechend notwendige Bonding-Temperatur beträgt in diesem Fall nur ca. 370-390 °C, wobei ein Umgebungsdruck von beispielsweise 10⁻⁵ mbar und ein Anpressdruck von 48.3 kPa während weniger als 5 Minuten einwirken.

Andere geeignete Verfahren sind in der europäischen Patentanmeldung Nr. 10 405 113.1 der Blösch Ressourcen AG vom 10.06.2010 im Detail beschrieben. Die Figur 2a zeigt einen Schnitt durch die Siliziumplatte 2 und die Glasplatte 3, die durch die Befestigungspunkte 11 zusammengehalten werden. Aus der Figur 2b gehen die Positionen der Befestigungspunkte hervor. Sie sind so ausgewählt, dass die Werkstücke 1 nach dem Ausschneiden mindestens durch einen Befestigungspunkt 11 mit dem Träger verbunden sind. Bei den zahnradförmigen Werkstücken 1 sind die Befestigungspunkte 11 im Zentrum der Werkstücke 1 positioniert, wobei der Durchmesser der Befestigungspunkte 11 1.0 mm beträgt.

Nach dem Befestigen erfolgt das Ausschneiden der Werkstücke 1 aus der Siliziumplatte 2. Dazu fährt ein Schneidelaserstrahl eines gepulsten Lasers mit einer Wellenlänge von 532 nm Bahnen mehrmals ab, die parallel zu allen Konturen der Werkstücke 1 sind, so dass sich eine sichere Trennung der Werkstücke 1 vom umgebenden Rahmen ergibt. Bei einer 0.21 mm dicken Platte soll beispielsweise eine Breite der Schnittkontur von mindestens 100 µm erzeugt werden. Dazu werden 20 um jeweils 5 µm versetzte Bahnen erzeugt, wobei der Laserspot, fokussiert auf die obere Seite der Siliziumplatte, 20 µm beträgt. Dabei wird mit Einzelpulsen einer Länge von 5-15 ps gearbeitet, wobei die Pulsenergie ca. 75-80 µJ beträgt und das Pulsintervall ca. 4 µs. Die Vorschubgeschwindigkeit beim Abfahren der vordefinierten Bahnen liegt bei 100 mm/s, jede der Bahnen wird 4-8mal wiederholt.

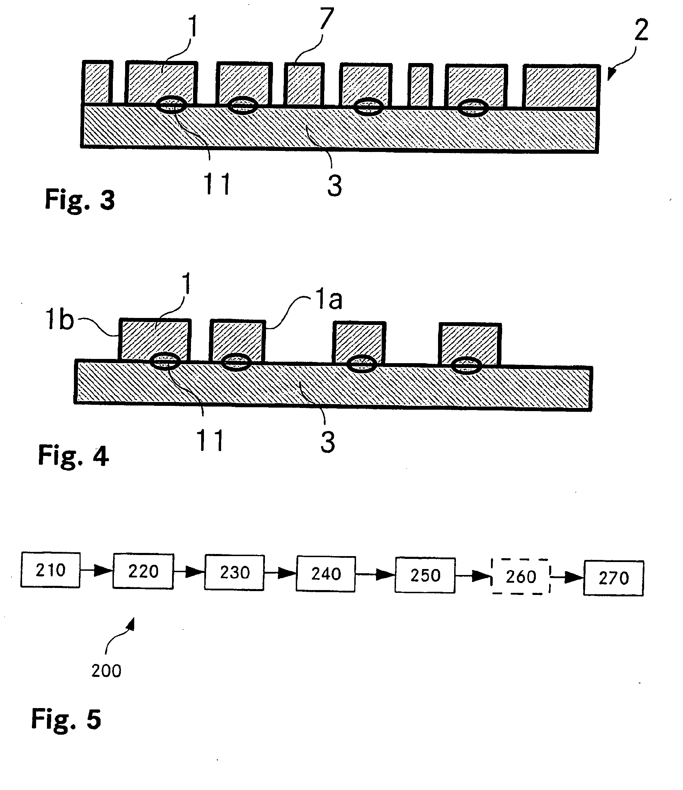

Die Figur 3 zeigt einen Schnitt durch die Glasplatte 3 und die Siliziumplatte 2 nach dem Ausschneiden der Werkstücke 1. Wie aus der Figur 5 deutlich ersichtlich ist, entsteht neben den Werkstücken 1 auch ein diese teilweise umgebender, teilweise von diesen eingeschlossener Rahmen 7, welcher aber nicht durch die Befestigungspunkte 11 mit der Glasplatte 3 verbunden ist. Dieser Rahmen 7 wird in einem nachfolgenden Schritt entfernt, so dass danach nur noch die Werkstücke 1 mit der Glasplatte 3 verbunden sind. Falls der Rahmen 7 an einzelnen Stellen ebenfalls noch mit der Glasplatte 3 verbunden ist, so kann der Rahmen 7 durch eine mechanische Beanspruchung dennoch leicht entfernt werden. Es ergibt sich die in der Figur 4 gezeigte Situation.

Nach dem Schneiden wurden die Werkstücke für 5 Minuten in ein Ultraschallbad gegeben, anschliessend in einer alkalischen Seife bei Temperaturen von 50-80 °C und einer Einwirkungszeit von unter 10 Minuten gereinigt sowie schliesslich mit Reinstwasser gespült.

Nach der Reinigung erfolgt eine Behandlung der (seitlichen) Laser-Schnittflächen 1b der Werkstücke 1. Dazu werden die auf der Glasplatte 3 befestigten Werkstücke 1 in einer Vakuumanlage einem Oxidations-/Nitrierungsschritt unterzogen. Dazu werden die Teile zunächst in einer gemischten N₂-H₂-Atmosphäre von Raumtemperatur in ca. 135 Minuten auf 470-480 °C aufgeheizt. Die Prozesskammer wird zunächst auf 15 Pa evakuiert. Der Druck in der Prozesskammer wird anschliessend, während einer ersten Phase, durch entsprechende Zufuhr von H₂ und N₂ schrittweise auf 90, 150, 200, 250 und 600 Pa erhöht und jeweils eine gewisse Zeit auf dem entsprechenden Wert gehalten.

In einer nächsten Phase wird die Zufuhr von H₂ bzw. N₂ eingestellt und die Prozesskammer auf 100 Pa evakuiert. Mit Zufuhr von N₂O werden dann wiederum vorgegebene Druckwerte erreicht und gehalten (z. B. stufenweise 80, 100 und 600 Pa), wobei die Temperatur bei ca. 470-480 °C gehalten wird.

Sowohl in der ersten als auch in der zweiten Phase wird in der Prozesskammer ein pulsierendes Plasma erzeugt. Dazu wird die angelegte Spannung während eines Pulses (Pulsdauern 30, 40 oder 50 µs) zwischen 0 V und einer vorgegebenen Spannung (300, 400, 450 bzw. 550 V) variiert. Es ergeben sich Spitzenstromwerte von 40 - 60 A sowie mittlere Plasmaleistungen von bis 8 kW im N₂-H₂-Plasma sowie von 20 - 25 A bzw. 1 kW im N₂O-Plasma.

Anschliessend werden die Werkstücke in der Prozesskammer bei einem Druck von ca. 1'100 Pa auf Raumtemperatur abgekühlt, dies dauert ca. 11 Stunden.

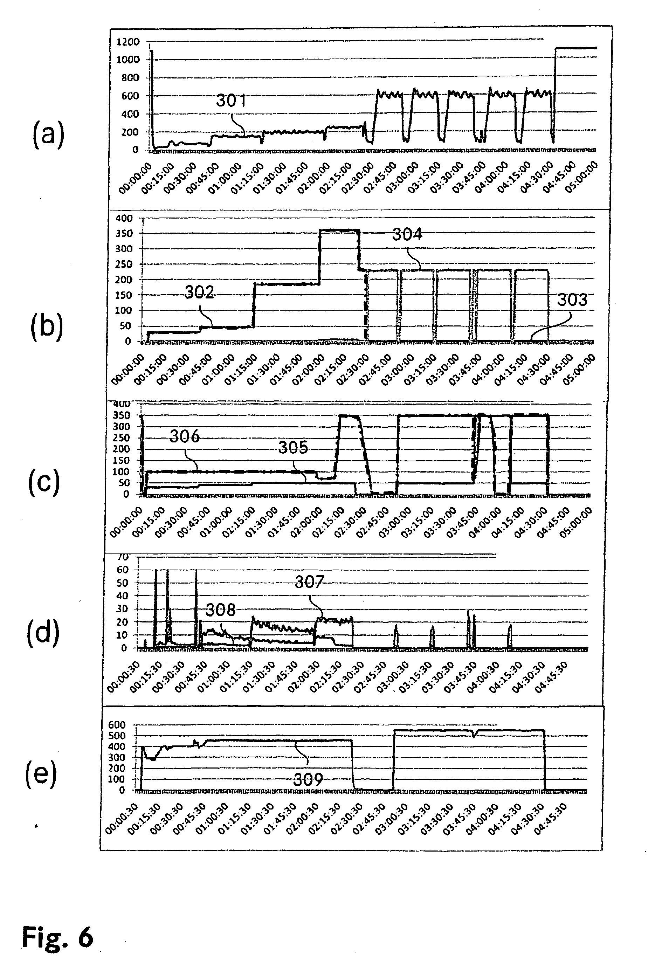

Die Versuchsparameter entsprechen denjenigen des Beispiels 1, welches weiter unten beschrieben ist. Sie sind in der Figur 6 dargestellt. Wie weiter unten, im Zusammenhang mit dem Beispiel 2, dargestellt ist, sind auch geringere Prozesstemperaturen möglich. Dies ermöglicht den Einsatz von Verbindungstechniken für das Verbinden der Werkstücke mit dem Träger, die eine geringere Temperaturbeständigkeit aufweisen, wie z. B. das oben erwähnte eutektische Bonden mit Au-Si.

Die auf der Glasplatte 3 befestigten Werkstücke 1 werden nun in ein chemisches Bad gegeben. Dieses setzt sich beispielsweise zusammen aus 3 I Wasser, 1.05 kg Ammoniumhydrogendifluorid (NH₄HF₂) und 625 ml 40%iger Flusssäure (HF), wobei zur Herstellung das Wasser vorgelegt und anschliessend das NH₄HF₂ und schliesslich die Säure zugegeben werden. In diesem chemischen Bad werden die Werkstücke während 5 Minuten unter schwachem Rühren belassen. Anschliessend erfolgt eine Reinigung in Reinstwasser.

Die Werkstücke 1 können nun weiterverarbeitet werden, z. B. durch Beschichtung.

Die Werkstücke 1 werden - je nach Weiterverarbeitung - vor der Säurebehandlung, nach der Säurebehandlung oder auch erst im Rahmen oder nach der weiteren Verarbeitung von der Glasplatte 3 abgelöst. Dies erfolgt in an sich bekannter Weise mittels eines geeigneten chemischen Bads, indem die Al-Si-Schicht chemisch angegriffen wird.

Die Figur 5 zeigt ein Blockschema einer Anlage zur Durchführung des erfindungsgemässen Herstellungsverfahrens. Die Anlage 200 umfasst eine Befestigungseinheit 210 zum Befestigen der Siliziumplatte auf einem Träger. Aus der auf dem Träger befestigten Siliziumplatte werden sodann in einer Schneideinheit 220 einzelne Werkstücke mit einem Laser ausgeschnitten. In einer ersten Handhabungseinheit 230 wird der Rahmen vom Träger entfernt, wobei die Werkstücke auf dem Träger verbleiben. In dieser Handhabungseinheit 230 erfolgt auch eine erste Reinigung des Trägers mitsamt der Werkstücke, um lose Partikel (z. B. Staub) vor der nachfolgenden Weiterverarbeitung zu entfernen. In einer Prozesskammer 240 werden die Schnittflächen oxidiert bzw. nitriert. Nun werden die Werkstücke in einer Behandlungseinheit 250 einer Behandlung mit einer geeigneten chemischen Zusammensetzung unterworfen. In einer (optionalen) Bearbeitungsstation 260 folgt eine Bearbeitung des Werkstücks in an sich bekannter Weise, z. B. durch Aufbringen einer Beschichtung, wie oben erwähnt. Schliesslich werden in einer Ablöseeinheit 270 die Werkstücke vom Träger entfernt.

### Beispiel 1

Zur Erprobung des erfindungsgemässen Verfahrens wurde zunächst eine 0.21 mm dicke Materialplatte aus monokristallinem Silizium(100) mittels eines Kapton®-Klebebands CMC 70752 der Firma CMC Klebetechnik GmbH, Frankenthal, Deutschland, auf einen Glasträger geklebt. Eine Verklebung folgte nur an Stellen, an welchen später herzustellende Werkstücke zu liegen kamen, um die einfache Entfernung des Rahmens zu ermöglichen. Mittels eines gepulsten Schneidelaserstrahls (Wellenlänge 532 nm, Pulslänge 5-15 ps, Spotdurchmesser auf der Plattenoberfläche 20 µm, Repetitionsfrequenz 250 kHz) wurden dann Werkstücke ausgeschnitten, zum einen mit Einzelpulsen und zum anderen mit Pulszügen zu 6 Pulsen (mit einem zeitlichen Abstand von je 20 ns). Der Schneidelaserstrahl ist mit einer Geschwindigkeit von 100 mm/s Bahnen abgefahren, die parallel zu den Konturen der Werkstücke verlaufen und je 5 bis 10 µm voneinander entfernt sind. Alle Bahnen ergaben eine minimale Gesamtbreite von 100 µm.

Es wurden zwei Versuchsreihen mit folgenden Parametern durchgeführt:

| Versuchsreihe | **A** | **B** |
|---|---|---|
| Pulsenergie | 11 - 13 µl | 75 - 80 µl |
| Anzahl Durchläufe pro Bahn | 10 - 18 | 4-8 |

Nach dem Schneiden wurden die Werkstücke für 5 Minuten in ein Ultraschallbad gegeben, anschliessend in einer alkalischen Seife bei Temperaturen von 50-80 °C und einer Einwirkungszeit von unter 10 Minuten gereinigt sowie schliesslich mit Reinstwasser gespült. Anschliessend werden die Werkstücke vom Träger gelöst.

Nach dem Ablösen vom Träger wurden ein Teil der Werkstücke in einer Vakuumanlage einem Oxidations-/Nitrierungsschritt unterzogen. Dazu wurden die Teile zunächst in einer gemischten N₂-H₂-Atmosphäre von Raumtemperatur in ca. 135 Minuten auf 470-480 °C aufgeheizt. Die Prozesskammer wurde zunächst auf 15 Pa evakuiert. Der Druck in der Prozesskammer wurde anschliessend, während einer ersten Phase, durch entsprechende Zufuhr von H₂ und N₂ schrittweise auf 90, 150, 200, 250 und 600 Pa erhöht und jeweils ca. 30-45 Minuten auf dem entsprechenden Wert gehalten.

In einer nächsten Phase wurde die Zufuhr von H₂ bzw. N₂ eingestellt und die Prozesskammer auf 100 Pa evakuiert. Mit Zufuhr von N₂O wurden dann wiederum vorgegebene Druckwerte erreicht und gehalten (z. B. stufenweise 80, 100 und 600 Pa während je 5-20 Minuten), wobei die Temperatur bei ca. 470-480 °C gehalten wurde.

Sowohl in der ersten als auch in der zweiten Phase wurde in der Prozesskammer ein pulsierendes Plasma erzeugt. Dazu wurde die angelegte Spannung während eines Pulses (Pulsdauern 30, 40 oder 50 µs) zwischen 0 V und einer vorgegebenen Spannung (300, 400, 450 bzw. 550 V) variiert. Es ergaben sich Spitzenstromwerte von 40 - 60 A sowie mittlere Plasmaleistungen von bis 8 kW im N₂-H₂-Plasma sowie von 20 - 25 A bzw. 1 kW im N₂O-Plasma.

Anschliessend wurden die Werkstücke in der Prozesskammer bei einem Druck von ca. 1' 100 Pa auf Raumtemperatur abgekühlt, dies dauerte ca. 11 Stunden.

Die genauen Versuchsparameter sind in der Figur 6 dargestellt: Die Abbildung (a) zeigt den Verlauf des Drucks 301 in Pa. Die Abbildung (b) zeigt den Verlauf der Gaszufuhr von N₂ (Kurve 302), H₂ (Kurve 303) sowie N₂O (Kurve 304) jeweils in ml/min. Die Abbildung (c) zeigt die Pulszeit (Kurve 305) und die Pause zwischen benachbarten Pulsen (Kurve 306), jeweils in µs. Die Abbildung (d) zeigt den Pulsstrom (Kurve 307) und den mittleren Strom (Kurve 308), jeweils in A. Die Abbildung (e) schliesslich zeigt den Verlauf der Spannung 309 in V.

Die oxidierten Werkstücke sowie die als Vergleichsprobe dienenden ausgeschnittenen und gereinigten aber nicht oxidierten Werkstücke wurden sodann in ein chemisches Bad gegeben. Dieses setzte sich zusammen aus 3 l Wasser, 1.05 kg Ammoniumhydrogendifluorid (NH₄HF₂) und 625 ml 40%iger Flusssäure (HF), wobei zur Herstellung das Wasser vorgelegt und anschliessend das NH₄HF₂ und schliesslich die Säure zugegeben wurde. In diesem chemischen Bad wurden die Werkstücke während 5 Minuten unter schwachem Rühren belassen. Anschliessend erfolgte eine Reinigung in Reinstwasser.

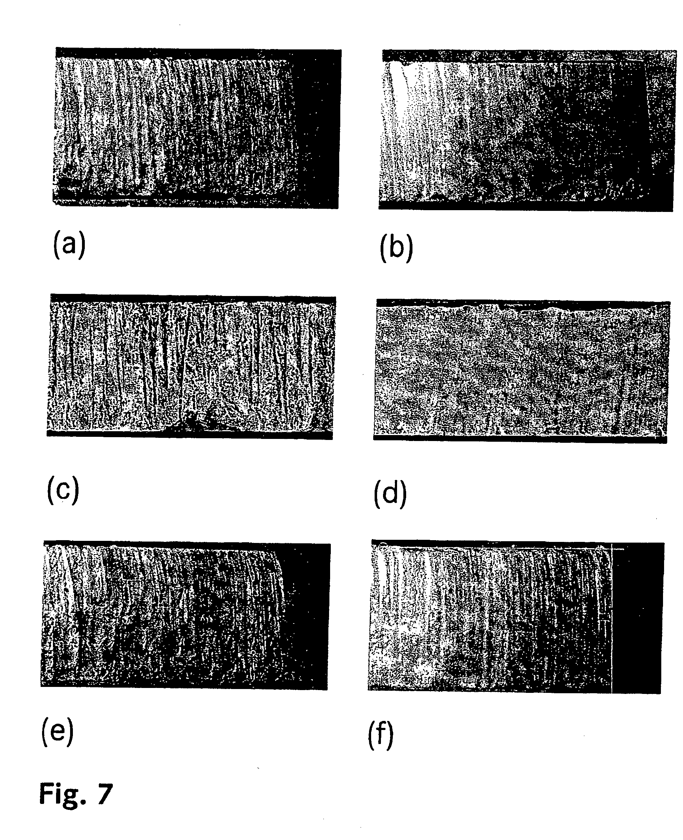

Die Figur 7 zeigt elektronenmikroskopische Aufnahmen der Seitenflächen. Die Aufnahmen (a), (c) und (e) zeigen Flächen von Werkstücken, die nicht der Oxidation/ Nitrierung unterzogen wurden, die Aufnahmen (b), (d) und (f) zeigen die entsprechenden Flächen der oxidierten/nitrierten Werkstücke. Die Schnittflächen wurden gemäss den vorstehenden Angaben erzeugt, jeweils bei Pulsenergien von 75-80 µJ und 8 Wiederholungen.

Bei kleinen Pulsenergien gemäss Versuchsreihe A waren nur geringe Unterschiede der Rauigkeit der Flanken vorhanden. Bei grösseren Pulsenergien gemäss Versuchsreihe B (75-80 µJ) sind die Flanken der oxidierten Werkstücke deutlich glatter als bei den nicht oxidierten Vergleichsobjekten. Die besten Ergebnisse wurden erreicht bei einer grösseren Zahl von Wiederholungen der Laserbahnen. Die glatteren Flanken der gemäss dem erfindungsgemässen Verfahren hergestellten Teile haben deutlich verbesserte tribologische Eigenschaften zur Folge.

### Beispiel 2

In einem zweiten Versuch wurde wiederum eine 0.21 mm dicke Materialplatte aus monokristallinem Silizium(111) mittels eines Kapton®-Klebebands CMC 70752 der Firma CMC Klebetechnik GmbH, Frankenthal, Deutschland, auf einen Glasträger geklebt. Eine Verklebung folgte nur an Stellen, an welchen später herzustellende Werkstücke zu liegen kamen, um die einfache Entfernung des Rahmens zu ermöglichen. Mittels eines gepulsten Schneidelaserstrahls (Wellenlänge 532 nm, Pulslänge 5-15 ps, Spotdurchmesser auf der Plattenoberfläche 10 µm, Repetitionsfrequenz 250 kHz) wurden dann Werkstücke ausgeschnitten, und zwar mit Einzelpulsen. Der Schneidelaserstrahl ist mit einer Geschwindigkeit von 200-300 mm/s Bahnen abgefahren, die parallel zu den Konturen der Werkstücke verlaufen und je ca. 5 µm voneinander entfernt sind. Alle Bahnen ergaben eine minimale Gesamtbreite von 100 µm. Die Pulsenergie hat 75-80 µJ betragen, die Bahnen wurden 25 bis 30 mal durchlaufen.

Nach dem Schneiden wurden die Werkstücke für 5 Minuten in ein Ultraschallbad gegeben, anschliessend in einer alkalischen Seife bei Temperaturen von 50-80 °C und einer Einwirkungszeit von unter 10 Minuten gereinigt sowie schliesslich mit Reinstwasser gespült. Anschliessend werden die Werkstücke vom Träger gelöst.

Nach dem Ablösen vom Träger wurden ein Teil der Werkstücke in einer Vakuumanlage einem Oxidations-/Nitrierungsschritt unterzogen. Dazu wurden die Teile zunächst in einer gemischten N₂-H₂-Atmosphäre von Raumtemperatur in ca. 75 Minuten auf 300-310°C aufgeheizt. Die Prozesskammer wurde zunächst auf 10 Pa evakuiert. Der Druck in der Prozesskammer wurde anschliessend, während einer ersten Phase, durch entsprechende Zufuhr von H₂ und N₂ schrittweise auf 70, 150, 200, 250 und 600 Pa erhöht und jeweils eine gewisse Zeit auf dem entsprechenden Wert gehalten.

In einer nächsten Phase wurde die Zufuhr von H₂ bzw. N₂ eingestellt und die Prozesskammer auf 80 Pa evakuiert. Mit Zufuhr von N₂O wurden dann wiederum vorgegebene Druckwerte erreicht und gehalten (z. B. stufenweise 80, 100 und 600 Pa), wobei die Temperatur bei ca. 300-310 °C gehalten wurde.

Sowohl in der ersten als auch in der zweiten Phase wurde in der Prozesskammer ein pulsierendes Plasma erzeugt. Dazu wurde die angelegte Spannung während eines Pulses (Pulsdauern 30, 40 oder 50 µs) zwischen 0 V und einer vorgegebenen Spannung (400, 450 bzw. 550 V) variiert. Es ergaben sich Spitzenstromwerte von 40 - 60 A sowie mittlere Plasmaleistungen von bis 8 kW im N₂-H₂-Plasma sowie von 20 - 25 A bzw. 1 kW im N₂O-Plasma.

Anschliessend wurden die Werkstücke in der Prozesskammer bei einem Druck von ca. 1'100 Pa auf Raumtemperatur abgekühlt, dies dauerte ca. 9 Stunden.

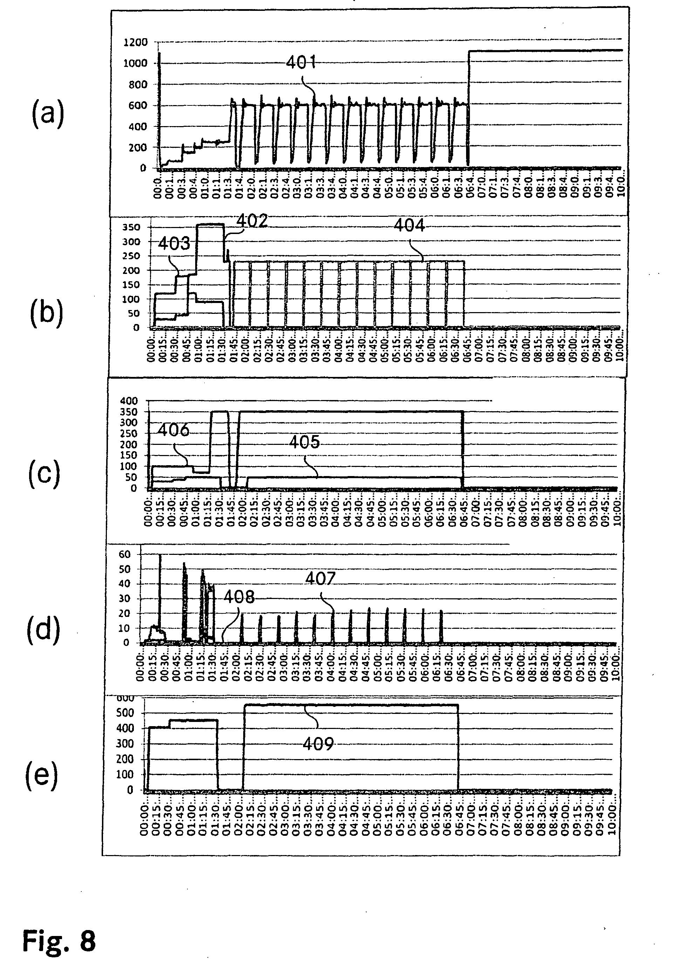

Die genauen Versuchsparameter sind in der Figur 8 dargestellt: Die Abbildung (a) zeigt den Verlauf des Drucks 401 in Pa. Die Abbildung (b) zeigt den Verlauf der Gaszufuhr von N₂ (Kurve 402), H₂ (Kurve 403) sowie N₂O (Kurve 404) jeweils in ml/min. Die Abbildung (c) zeigt die Pulszeit (Kurve 405) und die Pause zwischen benachbarten Pulsen (Kurve 406), jeweils in µs. Die Abbildung (d) zeigt den Pulsstrom (Kurve 407) und den mittleren Strom (Kurve 408), jeweils in A. Die Abbildung (e) schliesslich zeigt den Verlauf der Spannung 409 in V.

Die oxidierten Werkstücke sowie die als Vergleichsprobe dienenden ausgeschnittenen und gereinigten aber nicht oxidierten Werkstücke wurden sodann in ein chemisches Bad gegeben. Dieses setzte sich zusammen aus 3 l Wasser, 1.05 kg Ammoniumhydrogendifluorid (NH₄HF₂) und 625 ml 40%iger Flusssäure (HF), wobei zur Herstellung das Wasser vorgelegt und anschliessend das NH₄HF₂ und schliesslich die Säure zugegeben wurde. In diesem chemischen Bad wurden die Werkstücke 5 Minuten unter schwachem Rühren belassen. Anschliessend erfolgte eine Reinigung in Reinstwasser.

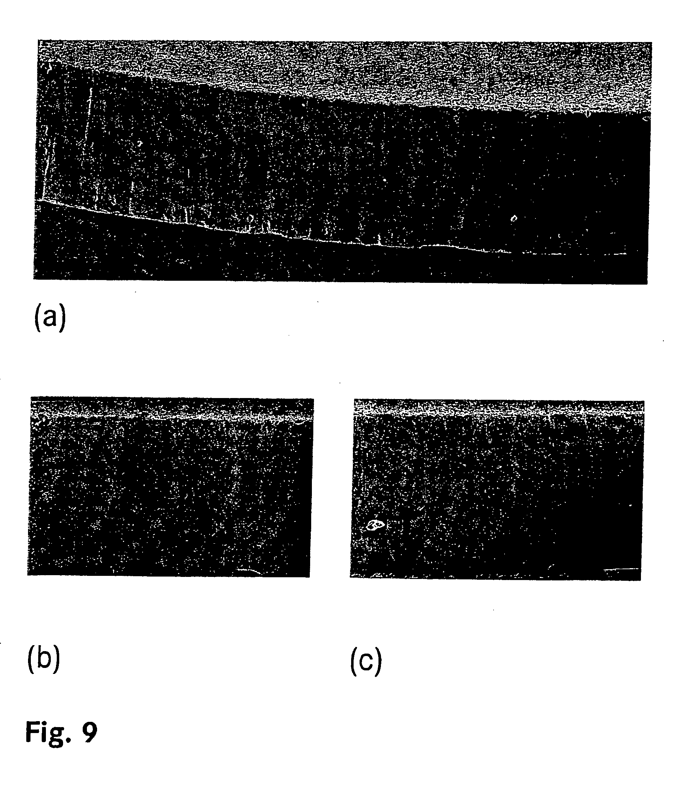

Die Figur 9 zeigt elektronenmikroskopische Aufnahmen der Seitenflächen. Die Aufnahme (a) zeigt eine Seitenfläche eines Werkstücks, welche nicht der Oxidation/Nitrierung unterzogen wurden, die Aufnahmen (b) und (c) zeigen die entsprechenden Flächen der oxidierten/nitrierten Werkstücke.

Auch hier ist deutlich sichtbar, dass die Oxidation/Nitrierung die Ausbildung von deutlich glatteren Schneidflächen ermöglicht. Aufgrund der geringeren Prozesstemperatur im Rahmen des Beispiels 2 können die Werkstücke während des Oxidierens/Nitrierens grundsätzlich auf dem Träger belassen werden, ohne dass Verbindungen wie die erwähnte Klebeschicht oder eutektische Au-Si-Bondingpunkte beeinträchtigt würden.

Es gibt weitere Möglichkeiten, eine Siliziumplatte mit einem Träger temporär zu verbinden. In Abhängigkeit des Materials des Trägers und je nachdem welche Weiterverarbeitung vorgesehen ist, müssen diese temporären Verbindungen unter-schiedliche Bedingungen erfüllen. Es ist vorstellbar, dass z. B. direkt Klebstoffe als Haftschicht auf den Träger aufgebracht werden. Diese Klebstoffe können dann z. B. auch durch UV-Bestrahlung oder andere Bestrahlungsarten ausgehärtet werden. Dabei können die Klebstoffe zuerst ganzflächig auf dem Träger aufgebracht werden und dann nur an den vorgesehenen Klebeflächen ausgehärtet werden. Es ist aber auch möglich, die Klebstoffe schon zu Beginn nur an den vorgesehenen Klebeflächen aufzubringen.

Anstelle des Kapton®-Klebebands sind auch andere Materialien als Klebefolie respektive als Haftschicht vorstellbar, z. B. eine 12 µm dicke Acrylfolie (z. B. DS-PET 12 my des Herstellers Ritrama S.p.A.). Der Klebefilm kann direkt in vorgeschnittener Form nur an denjenigen Stellen auf dem Träger angebracht werden, wo die Werkstücke zu liegen kommen.

Weitere Verfahren zum temporären Verbinden der Siliziumplatte mit dem Träger sind möglich. So kann z. B. ein Glaslot verwendet werden wie das Medium 11-036 des Herstellers Ferro, Cleveland, Ohio, USA. Dieses wird durch Siebdruck auf diejenigen Stellen aufgebracht, wo die Werkstücke zu liegen kommen. Das Bonden erfolgt in einer Sauerstoffatmosphäre bei 425 °C während ca. 10 Minuten. Das Ablösen der bearbeiteten Werkstücke erfolgt dann durch Aufwärmen des Trägers auf eine Temperatur, bei welcher das Glaslot wieder flüssig wird. Die Werkstücke können anschliessend mittels einer Saugvorrichtung vom Träger gelöst werden.

Ein weiteres mögliches Verfahren beruht auf eutektischem Bonden. Auf dem Träger wird eine Goldschicht (0.5 bis 2.0 µm dick) aufgebracht, und zwar nur an denjenigen Stellen, wo die Werkstücke zu liegen kommen. In einer von der Firma Suss MicroTec, Waterbury Center, USA kommerziell erhältlichen Anlage wird dann die Goldschicht mit dem Träger und dem Werkstück mit einem Druck von mind. 1 MPa, unter einer Temperatur von 300-450 °C während 20-45 Minuten verbunden. Die Verbindung findet in einem Vakuum oder einer Atmosphäre aus Wasserstoff und Stickstoff statt. Die Fertigteile werden schliesslich in einem chemischen Bad abgelöst, indem die Goldschicht chemisch angegriffen und somit die Fertigteile vom Träger gelöst werden.

Im Rahmen des eutektischen Bondens kann anstelle der Al-Si- bzw. Au-Si-Schicht auch eine andere Legierung zum Einsatz kommen, z. B. Al-Ge, Au-Ge, Au-In, Au-Sn oder Cu-Sn. Beim Einsatz von Au-Sn (80%/20%) muss beispielsweise eine eutektische Temperatur von nur 280 °C erreicht werden. Entsprechend ist jeweils ein Befestigungsverfahren der Siliziumplatte am Träger zu wählen, mit welchem Verbindungen geschaffen werden, welche die Temperatur bei der Oxidation bzw. Nitrierung aushalten.

Weitere Verfahren basieren auf anderen Bonding-Methoden. So bietet beispielsweise die Firma Brewer Science, Rolla, USA unter der Bezeichnung WaferBOND® HT Materialien zum temporären Bonden an. Das Haftmittel wird auf dem Träger aufgebracht, danach folgt ein wärmebasiertes Aushärten. Die Werkstücke werden abgelöst, indem sie und der Träger erwärmt werden und die Werkstücke anschliessend seitlich weggezogen werden. Es ergeben sich De-bonding-Zeiten von unter 5 Minuten.

Im Fall des Diffusionsbondens, bei dem hochpolierte (z. B. Ra < 1 nm) Glasträger und Siliziumplatten verwendet werden, erfolgt die Aufhebung der Hafteigenschaften durch eine Strukturierung der Siliziumplatte (z. B. durch nasschemisches Siliziumätzen) oder des Trägers. Dabei wird eine Kontaktfläche nur an Stellen stehen gelassen (d. h. Haftung gewährleistet), wo die Werkstücke zu liegen kommen. Das Debonding verläuft wie obig bereits erwähnt.

Anstelle des frequenzverdoppelten Lasers (532 nm) können je nach verwendeten Materialien und gewünschten Geometrien auch andere Laser eingesetzt werden. Zum Beispiel kann ein Nd:YAG Laser, welche bei der Grundwellenlänge von 1064 nm Licht emittiert, oder ein CO2-Laser verwendet werden. Die oben angegebenen Verfahrensparameter, z. B. hinsichtlich der Anzahl Wiederholungen, der eingesetzten Leistung, des Strahldurchmessers oder der Linienabstände, sind als Beispiele zu verstehen und können in Abhängigkeit des verwendeten Lasers, des zu bearbeitenden Materials oder anderer Umstände variiert werden. Sie lassen sich insbesondere derart optimieren, dass nach dem Oxidieren bzw. Nitrieren und der Behandlung mit der chemischen Zusammensetzung eine Fläche mit geringstmöglicher Rauigkeit resultiert.

Neben dem Ausschneiden können noch andere Bearbeitungen der Werkstücke mittels eines Lasers vorgenommen werden. Dies kann insbesondere das Anbringen von Rampen oder Stufen oder das Anfertigen von Strukturen auf einer Oberfläche der Siliziumplatte, z. B. Vertiefungen oder Beschriftungen, umfassen. Diese Art von Bearbeitungen der Werkstücke mittels eines Lasers kann sowohl vor, während als auch nach dem Schneiden erfolgen. Mit Vorteil werden auch die weiteren Flächen, welche mittels Laser bearbeitet wurden, oxidiert bzw. nitriert und anschliessend mit der geeigneten chemischen Zusammensetzung behandelt.

Zusammenfassend ist festzustellen, dass durch die Erfindung ein Verfahren zur Herstellung von mechanischen, insbesondere mikromechanischen, Werkstücken aus einer Platte aus monokristallinem Silizium geschaffen wird, welches die Herstellung von (mikro-) mechanischen Werkstücken mit regelmässiger und glatter Laser-Schnittfläche ermöglicht.

## Patentansprüche

1. Verfahren zur Herstellung von mechanischen, insbesondere mikromechanischen, Werkstücken (1) aus einer Platte (2) aus monokristallinem Silizium, mit dem Schritt:
a) Ausschneiden der Werkstücke (1) aus der Platte (2) mittels eines Laserschneidverfahrens, und **gekennzeichnet durch** folgende Schritte:
b) Erhitzen der ausgeschnittenen Werkstücke (1) und Aussetzen einer Gasatmosphäre, welche Sauerstoff und/oder Stickstoff enthält, so dass eine Oberfläche des Werkstücks (1) mindestens im Bereich der Schnittfläche (1b) oxidiert und/oder nitriert wird;
c) Behandeln der Oberfläche der Werkstücke (1) mindestens im Bereich der Schnittfläche (1b) mit einer chemischen Zusammensetzung, **durch** welche vorwiegend ein oxidierter bzw, nitrierter Anteil der Oberfläche entfernt wird.

2. Verfahren nach Anspruch 1, **dadurch gekennzeichnet, dass** das Oxidieren und/oder Nitrieren der Werkstücke plasma-unterstützt erfolgt.

3. Verfahren nach Anspruch 2, **dadurch gekennzeichnet, dass** zum Oxidieren und/oder Nitrieren ein pulsierendes Plasma erzeugt wird.

4. Verfahren nach einem der Ansprüche 1 bis 3, **dadurch gekennzeichnet, dass** das Erhitzen auf eine Temperatur von unter 600 °C erfolgt, bevorzugt auf eine Temperatur von unter 500 °C, besonders bevorzugt auf eine Temperatur von unter 400 °C.

5. Verfahren nach einem der Ansprüche 1 bis 4, **dadurch gekennzeichnet, dass** die Gasatmosphäre als aktives Gas N₂O enthält.

6. Verfahren nach Anspruch 4, **dadurch gekennzeichnet, dass** die Werkstücke zum
Oxidieren und Nitrieren in einer ersten Phase einer Gasatmosphäre ausgesetzt werden, welche dominiert ist von N₂ und H₂ und in einer zweiten Phase einer Gasatmosphäre ausgesetzt werden, welche dominiert ist von N₂O.

7. Verfahren nach einem der Ansprüche 1 bis 6, **dadurch gekennzeichnet, dass** die chemische Zusammensetzung auf Fluorwasserstoffsäure basiert.

8. Verfahren nach einem der Ansprüche 1 bis 7, **gekennzeichnet durch** den weiteren Schritt des Beschichtens der Oberfläche der Werkstücke (1), mindestens teilweise im Bereich der Schnittfläche (1b).

9. Verfahren nach einem der Ansprüche 1 bis 8, **dadurch gekennzeichnet, dass** das Ausschneiden der Werkstücke (1) erfolgt, indem ein Laserstrahl Bahnen, die parallel zu Konturen der Werkstücke (1) sind, mehrmals abfährt.

10. Verfahren nach Anspruch 9 **dadurch gekennzeichnet, dass** das Ausschneiden der Werkstücke (1) mittels eines gepulsten Lasers erfolgt, wobei eine Pulsenergie von mehr als 30 µJ, bevorzugt von mehr als 50 µJ eingesetzt wird.

11. Verfahren nach einem der Ansprüche 1 bis 10, **dadurch gekennzeichnet, dass** die Platte (2) vor dem Ausschneiden der Werkstücke (1) auf einem Träger (3) befestigt wird, dass nach dem Ausschneiden ein Rahmen (7) vom Träger (3) entfernt wird und dass die Werkstücke (1) für das Oxidieren bzw. Nitrieren auf dem Träger (3) verbleiben.

12. Verfahren nach Anspruch 11, **dadurch gekennzeichnet, dass** die Platte (2) nur lokal mit dem Träger (3) verbunden wird, und zwar an Stellen, wo nach dem Ausschneiden Werkstücke (1) gebildet sind.

13. Anlage zur Herstellung von mechanischen, insbesondere mikromechanischen, Werkstücken aus einer Platte (2) aus monokristallinem Silizium mit einem Verfahren nach einem der Ansprüche 1 bis 12, umfassend:
a) eine Schneideinheit (220) zum Ausschneiden einzelner Werkstücke (1) aus der Platte (2) mit einem Laser, und **gekennzeichnet durch**:
b) eine Vakuumprozessstation (240) mit einer Kammer zur Aufnahme der Werkstücke (1), wobei in der Kammer die Werkstücke (1) erhitzt werden können und eine Gasatmosphäre erzeugbar ist, welche Sauerstoff und/oder Stickstoff enthält, so dass eine Oberfläche des Werkstücks (1) mindestens im Bereich der Schnittfläche (1b) oxidiert bzw. nitriert werden kann;
c) eine Behandlungsstation (250) zum Behandeln der Oberfläche der Werkstücke (1) mindestens im Bereich der Schnittfläche (1b) mit einer chemischen Zusammensetzung, **durch** welche vorwiegend ein oxidierter bzw. nitrierter Anteil der Oberfläche entfernt wird.

14. Anlage nach Anspruch 13, **dadurch gekennzeichnet, dass** die Vakuumprozessstation derart ausgebildet ist, dass eine plasma-unterstützte Oxidation und/oder Nitrierung des Werkstücks durchführbar ist.

15. Anlage nach Anspruch 13 oder 14, **dadurch gekennzeichnet, dass** sie weiter eine Beschichtungsstation zum Beschichten der Werkstücke umfasst, welche der Behandlungsstation nachgelagert ist.

16. Anlage nach einem der Ansprüche 13 bis 15, **dadurch gekennzeichnet, dass** sie weiter eine Befestigungsstation (210) zum Befestigen der Platte (2) auf einem Träger (3), eine der Schneideinheit (220) nachgeordnete Station (230) zum Entfernen eines Rahmens (7) sowie eine der Behandlungsstation (250) und insbesondere der Beschichtungsstation (260) nachgeordnete Ablösestation (270) zum Entfernen der fertigen Werkstücke vom Träger (3) umfasst.

## Claims

1. Method for producing mechanical, in particular micromechanical, workpieces (1) from a board (2) of monocrystalline silicon, comprising the step of:
a) cutting the workpieces (1) out of the board (2) by means of a laser cutting method, and **characterized by** the following steps:
b) heating the cut-out workpieces (1) and exposing them to a gas atmosphere containing oxygen and/or nitrogen, such that a surface of the workpiece (1) is oxidized and/or nitrided at least in the region of the cut face (1b);
c) treating the surface of the workpieces (1) at least in the region of the cut face (1b) with a chemical composition, by which predominantly an oxidized or nitrided fraction of the surface is removed.

2. Method according to Claim 1, **characterized in that** the oxidization and/or nitriding of the workpieces is effected with plasma enhancement.

3. Method according to Claim 2, **characterized in that** a pulsating plasma is generated for the oxidization and/or nitriding.

4. Method according to one of Claims 1 to 3, **characterized in that** the heating is effected to a temperature of below 600°C, preferably to a temperature of below 500°C and particularly preferably to a temperature of below 400°C.

5. Method according to one of Claims 1 to 4, **characterized in that** the gas atmosphere contains N₂O as active gas.

6. Method according to Claim 4, **characterized in that**, for the oxidization and nitriding, the workpieces are exposed to a gas atmosphere dominated by N₂ and H₂ in a first phase, and in a second phase are exposed to a gas atmosphere dominated by N₂O.

7. Method according to one of Claims 1 to 6, **characterized in that** the chemical composition is based on hydrofluoric acid.

8. Method according to one of Claims 1 to 7, **characterized by** the further step of coating the surface of the workpieces (1), at least partially in the region of the cut face (1b).

9. Method according to one of Claims 1 to 8, **characterized in that** the workpieces (1) are cut out by a laser beam repeatedly running over tracks parallel to contours of the workpieces (1).

10. Method according to Claim 9, **characterized in that** the workpieces (1) are cut out by means of a pulsed laser, with a pulse energy of more than 30 µJ, preferably of more than 50 µJ, being used.

11. Method according to one of Claims 1 to 10, **characterized in that** the board (2) is fastened on a support (3) before the workpieces (1) are cut out, **in that** a frame (7) is removed from the support (3) after the workpieces have been cut out and **in that** the workpieces (1) remain on the support (3) for the oxidization or nitriding.

12. Method according to Claim 11, **characterized in that** the board (2) is connected to the support (3) only locally, to be precise at points where workpieces (1) are formed after the cutting-out process.

13. Plant for producing mechanical, in particular micromechanical, workpieces from a board (2) of monocrystalline silicon using a method according to one of Claims 1 to 12, comprising:
a) a cutting unit (220) for cutting individual workpieces (1) out of the board (2) using a laser, and **characterized by**:
b) a vacuum processing station (240) with a chamber for receiving the workpieces (1), wherein, in the chamber, the workpieces (1) can be heated and a gas atmosphere containing oxygen and/or nitrogen can be generated, such that a surface of the workpiece (1) can be oxidized or nitrided at least in the region of the cut face (1b);
c) a treatment station (250) for treating the surface of the workpieces (1) at least in the region of the cut face (1b) with a chemical composition, by which predominantly an oxidized or nitrided fraction of the surface is removed.

14. Plant according to Claim 13, **characterized in that** the vacuum processing station is configured in such a manner that plasma-enhanced oxidization and/or nitriding of the workpiece can be carried out.

15. Plant according to Claim 13 or 14, **characterized in that** it further comprises a coating station for coating the workpieces, which is arranged downstream of the treatment station.

16. Plant according to one of Claims 13 to 15, **characterized in that** it further comprises a fastening station (210) for fastening the board (2) on a support (3), a station (230), arranged downstream of the cutting unit (220), for removing a frame (7) and also a release station (270), arranged downstream of the treatment station (250) and in particular of the coating station (260), for removing the finished workpieces from the support (3).

## Revendications

1. Procédé de fabrication de pièces mécaniques, en particulier micromécaniques, (1) à partir d'une plaque (2) en silicium monocristallin, comprenant l'étape suivante:
a) découpage des pièces (1) hors de la plaque (2) au
moyen d'un procédé de découpage au laser, et **caractérisé par** les étapes suivantes:
b) chauffage des pièces découpées (1) et exposition à une atmosphère gazeuse, qui contient de l'oxygène et/ou de l'azote, de telle manière qu'une surface de la pièce (1) soit oxydée et/ou nitrurée au moins dans la région de la face de coupe (1b);
c) traitement de la surface des pièces (1) au moins dans la région de la face de coupe (1b) avec une composition chimique, par laquelle principalement une partie oxydée ou nitrurée de la surface est enlevée.

2. Procédé selon la revendication 1, **caractérisé en ce que** l'oxydation et/ou la nitruration des pièces est effectuée avec le soutien de plasma.

3. Procédé selon la revendication 2, **caractérisé en ce que**, pour l'oxydation et/ou la nitruration, on produit un plasma pulsé.

4. Procédé selon l'une quelconque des revendications 1 à 3, **caractérisé en ce que** l'on effectue le chauffage à une température inférieure à 600°C, de préférence à une température inférieure à 500°C, et de préférence encore à une température inférieure à 400°C,

5. Procédé selon l'une quelconque des revendications 1 à 4, **caractérisé en ce que** l'atmosphère gazeuse contient du N₂O comme gaz actif.

6. Procédé selon la revendication 4, **caractérisé en ce que** l'on expose les pièces, pour l'oxydation et la nitruration, dans une première phase à une atmosphère gazeuse, qui est dominée par N₂ et H₂ et dans une deuxième phase à une atmosphère gazeuse qui est dominée par N₂O.

7. Procédé selon l'une quelconque des revendications 1 à 6, **caractérisé en ce que** la composition chimique est basée sur l'acide fluorhydrique.

8. Procédé selon l'une quelconque des revendications 1 à 7, **caractérisé par** l'étape supplémentaire de revêtement de la surface des pièces (1), au moins partiellement dans la région de la face de coupe (1b).

9. Procédé selon l'une quelconque des revendications 1 à 8 **caractérisé en ce que** le découpage des pièces (1) est effectué du fait qu'un faisceau laser parcourt des trajectoires, qui sont parallèles à des contours des pièces (1).

10. Procédé selon la revendication 9, **caractérisé en ce que** le découpage des pièces (1) est effectué au moyen d'un laser pulsé, dans lequel on utilise une énergie pulsée de plus de 30 µJ, de préférence de plus de 50 µJ.

11. Procédé selon l'une quelconque des revendications 1 à 10, **caractérisé en ce que** l'on fixe la plaque (2) sur un support (3) avant le découpage des pièces (1), **en ce que** l'on enlève un cadre (7) du support (3) après le découpage et **en ce que** les pièces (1) restent sur le support (3) pour l'oxydation ou la nitruration.

12. Procédé selon la revendication 11, **caractérisé en ce que** l'on n'assemble la plaque (2) que localement au support (3), notamment à des endroits où des pièces (1) sont formées après le découpage.

13. Installation de fabrication de pièces mécaniques, en particulier micromécaniques, à partir d'une plaque (2) en silicium monocristallin avec un procédé selon l'une quelconque des revendications 1 à 12, comprenant:
a) une unité de coupe (220) pour le découpage de pièces individuelles (1) à partir de la plaque (2) avec un laser, et
**caractérisée par**:
b) une station de traitement sous vide (240) avec une chambre destinée à recevoir les pièces (1), dans laquelle les pièces (1) peuvent être chauffées dans la chambre et on peut y produire une atmosphère gazeuse, qui contient de l'oxygène et/ou de l'azote, de telle manière qu'une surface de la pièce (1) puisse être oxydée ou nitrurée, au moins dans la région de la face de coupe (1b);
c) une station de traitement (250) pour le traitement de la surface des pièces (1), au moins dans la région de la face de coupe (1b), avec une composition chimique par laquelle principalement une partie oxydée ou nitrurée de la surface est enlevée.

14. Installation selon la revendication 13, **caractérisée en ce que** la station de traitement sous vide est conçue de telle manière que l'on puisse effectuer une oxydation et/ou une nitruration de la pièce avec le soutien d'un plasma.

15. Installation selon la revendication 13 ou 14, **caractérisée en ce qu'**elle comprend en outre une station de revêtement pour le revêtement des pièces, qui est disposée en aval de la station de traitement.

16. Installation selon l'une quelconque des revendications 13 à 15, **caractérisée en ce qu'**elle comprend en outre une station de fixation (210) pour la fixation de la plaque (2) sur un support (3), une station (230) disposée en aval de la station de coupe (220) pour enlever un cadre (7) ainsi qu'une station de démontage (270), disposée en aval de la station de traitement (250) et en particulier de la station de revêtement (260), pour l'enlèvement des pièces terminées du support (3).
